# EUROPEAN PATENT APPLICATION

(11) **EP 2 452 864 A1**
(43) Date of publication of application: **16.05.2012**
(21) Application number: 10191325.9
(22) Date of filing: 16.11.2010
(51) Int. Cl.: B62K 3/00

(54) **Caster restricting mechanism for scooter and method of operating the same**

(71) Applicant: J.D Components Co., Ltd., Shou Shui Hsiang, Chang Hua Hsien (TW)
(72) Inventor: Chan, Kun-Do, 709, TAINAN CITY (TW)
(74) Representative: Becker Kurig Straus

(57) **Abstract**

A caster switching mechanism (20) for installation in a footboard (11) of a scooter (10) is used to control, through a switch (40) pivotally connected with the footboard (11), whether a wheel seat (31) is rotatable relative to footboard (11). When the switch (40) is located at a restricted position (P1) where the wheel seat (31) is stopped by the switch (40), the wheel seat (31) is prohibited from rotation relative to the footboard (11) such that a wheel (32) that is rotatably mounted to the wheel seat (31) can roll along one direction only. When the switch (40) is located at an unrestricted position (P2) where the switch (40) is separated from the wheel seat (31), the wheel seat (31) is rotatable relative to the footboard (11) such that the wheel (32) can roll along any direction corresponding to the orientation of the wheel seat (31).

## Description

### BACKGROUND OF THE INVENTION

### 1. Field of the Invention

The present invention relates generally to a scooter, and more specifically to a caster switching mechanism for a scooter, which enables a wheel of the caster assembly to roll in one direction or in any direction selectively.

### 2. Description of the Related Art

Conventional scooters, which are commonly used as sports equipments, can be mainly classified into two types based on the construction thereof. One is equipped with a rigid caster having a wheel seat stationarily fastened to the bottom of a footboard of the scooter such that the wheel that is rotatably connected with the wheel seat can roll in one direction only. Under this circumstance, a user standing on the footboard needs to kick the ground with one foot to propel the scooter forward. The disadvantage of the scooter of this type lies in that the user will need a well-trained skill to manipulate the scooter especially in the process of changing the scooter's direction because the scooter is not easy to change its direction when the wheel is traveling along a fixed direction. On the other hand, the other type is equipped with a swivel caster having a wheel seat rotatably mounted to the bottom of the footboard of the scooter, such that the wheel of the swivel caster can roll in any direction. To propel the scooter of this type and to manipulate the heading direction of the scooter, the user standing on the footboard can twist his body in cooperation with the rotation of the wheel seat.

For many scooter fans, they usually learn how to play the first-type scooter at first, and then the second-type scooter after they develop their skills. However, there are no commercially available scooters adopting dual modes, i.e. a rigid caster mode and a swivel caster mode, at present. This means that the fans will need to spend more money on different types of the scooters for satisfying their learning and playing.

### SUMMARY OF THE INVENTION

It is one objective of the present invention to provide a caster switching mechanism for a scooter, which can control whether or not a wheel seat is rotatable relative to a footboard of the scooter to satisfy different needs.

To achieve this objective of the present invention, the caster switching mechanism provided by the present invention comprises a caster assembly and a switch. The caster assembly has a wheel seat with a top end adapted for being rotatably connected with a bottom of a footboard of a caster, and a wheel rotatably connected with a bottom end of the wheel seat. The switch is adapted for being movably connected with the footboard of the scooter in such a way that the switch is movable relative to the footboard of the scooter between a restricted position where a first restricting portion of the wheel seat is stopped by a second restricting portion of the switch such that the wheel seat is prohibited from rotation relative to the footboard of the scooter, and an unrestricted position where the first restricting portion of the wheel seat and the second restricting portion of the switch are separated from each other for allowing the wheel seat to be rotatable relative to the footboard of the scooter.

Preferably, the first restricting portion of the restricting member is formed by two opposite planes, and the second restricting portion of the switch is formed by two spaced lateral walls. When the switch is located at the restricted position, the lateral walls of the switch are abutted against the planes of the restricting member, and when the switch is located at the unrestricted position, the lateral walls of the switch and the planes of the restricting member are separated from each other.

Preferably, a treadle can be mounted with one end of the switch and driven by an external force to move the switch.

Preferably, an elastic member can be disposed between the footboard of the scooter and the switch for elastically urging the switch by means of providing a rebound force to the switch.

To achieve the aforesaid objective of the present invention, a method of operating the caster switching mechanism provided by the present invention comprises the steps of a) stepping on the switch to drive the switch to move from the restricted position to the unrestricted position for enabling the wheel seat to be rotatable relative to the footboard of the scooter, and b) releasing the switch to allow the switch to move from the unrestricted position back to the restricted position for prohibiting the wheel seat from rotation relative to the footboard of the scooter.

To achieve the aforesaid objective of the present invention, another method of operating the caster switching mechanism provided by the present invention comprises the steps of a) stepping on the switch to drive the switch to move from the unrestricted position to the restricted position for prohibiting the wheel seat from rotation relative to the footboard of the scooter, and b) releasing the switch to allow the switch to move from the restricted position back to the unrestricted position for enabling the wheel seat to be rotatable relative to the footboard of the scooter.

Preferably, the wheel seat is adapted for being pivotally connected with a bevel plate of the footboard of the scooter and the wheel rolls along a direction parallel to a horizontal direction of an inclined surface of the bevel plate when the switch is located at the restricted position.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a perspective view of a scooter in which a caster switching mechanism according to a first embodiment of the prevent invention is installed;
FIG. 2 is an enlarged view of a part of the scooter of FIG. 1, showing that the switch is rested at a restricted position where no external force is exerted on the treadle;
FIG. 3 is an exploded view of a part of the scooter including the caster switching mechanism according to the first embodiment of the prevent invention;
FIG. 4 is a sectional view of a part of the scooter including the caster switching mechanism according to the first embodiment of the prevent invention, showing that the switch is located at the restricted position;

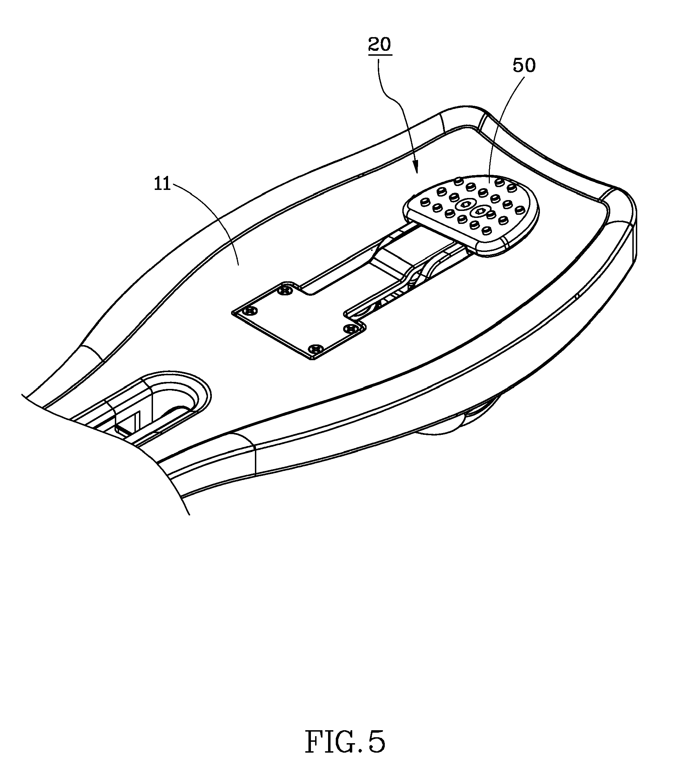

FIG. 5 is similar to FIG. 2, but showing that the switch is stayed at an unrestricted position where the treadle receives thereon an external force;
FIG. 6 is similar to FIG. 4, but that showing the switch is located at the unrestricted position;
FIG. 7 is a sectional view of a part of a scooter including a caster switching mechanism according to a second embodiment of the prevent invention, showing that the switch is located at the unrestricted position; and
FIG. 8 is similar to FIG. 7, but showing that the switch is located at the restricted position.

### DETAILED DESCRIPTION OF THE INVENTION

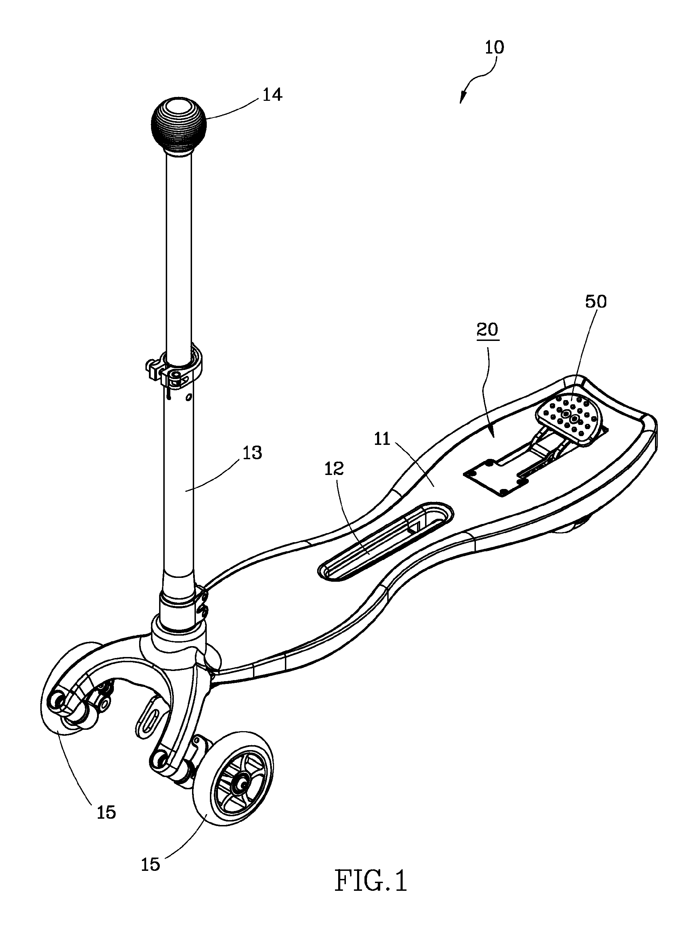

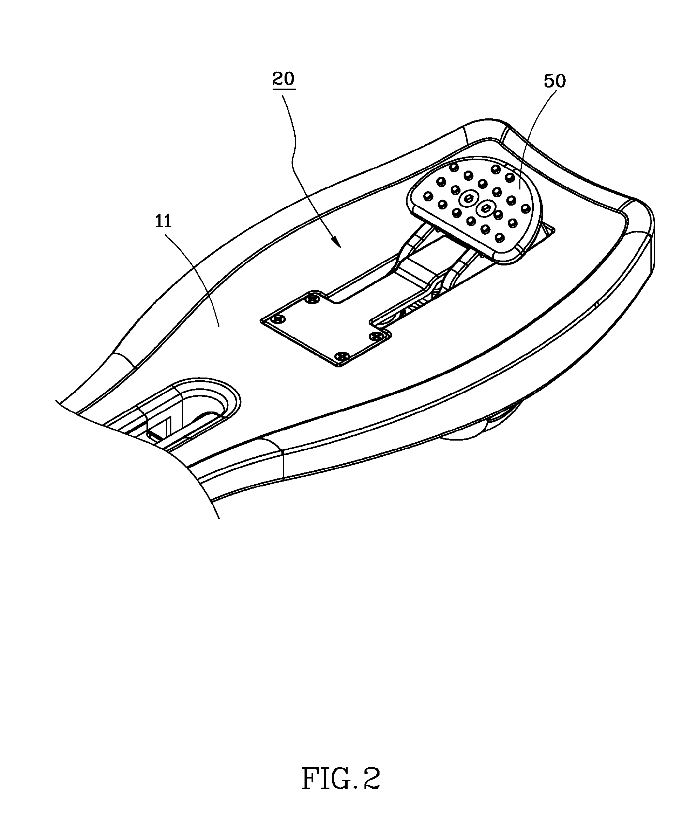

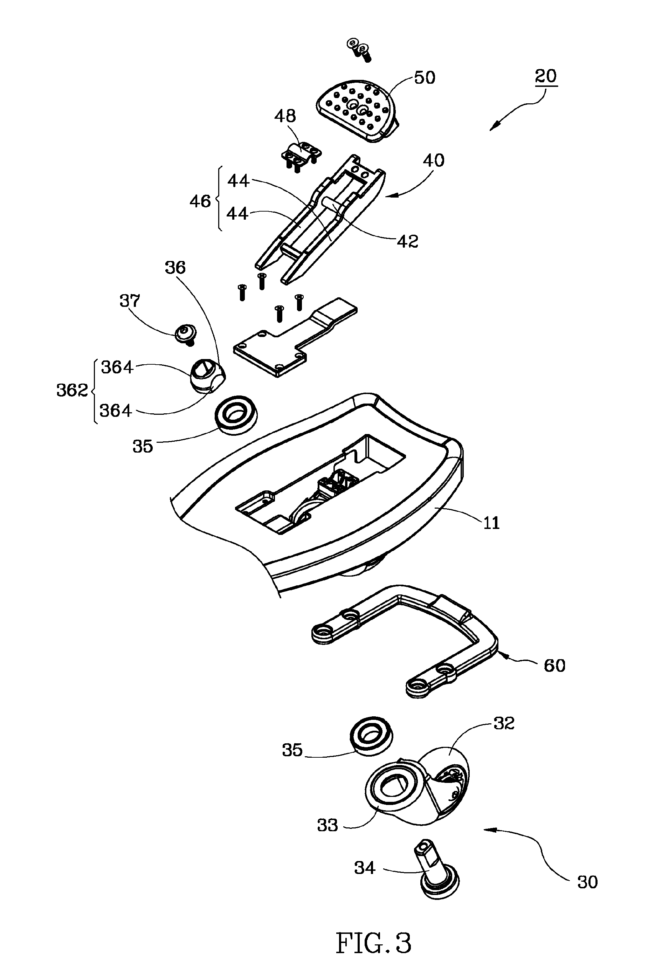

As shown in FIGS. 1 and 2, a caster switching mechanism **20** in accordance with a first embodiment of the present invention is adapted to be installed in a scooter **10.** In this embodiment, the scooter **10** includes a footboard **11** on which a user is standable, a rotating shaft **12** installed in the footboard **11,** a front tube **13** connected upright with a front end of the footboard **11,** a handlebar **14** connected with a top end of the front tube **13,** and two front wheels **15** rotatably connected with the front end of the footboard **11.** As shown in FIGS. 2 and 3, the caster switching mechanism **20** comprises a caster assembly **30,** a switch **40,** a treadle **50,** and an elastic member **60.**

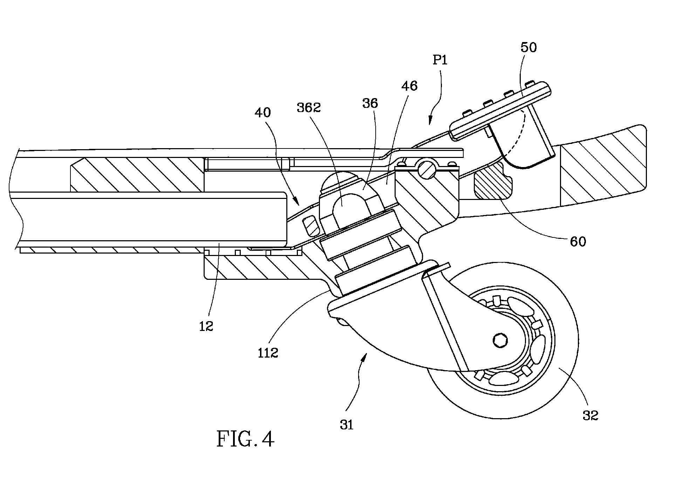

As shown in FIGS. 3 and 4, the caster assembly **30** includes a wheel seat **31** and a wheel **32.** The wheel seat **31** has a seat body **33** with a bottom end connected with the wheel **32,** a pivot **34** passing through the seat body **33** and a bevel plate **112** of the footboard **11** and fastened with a screw **37** such that the wheel seat **31** is installed in an inclined manner, two bearings **35** sleeved on the pivot **34,** and a restricting member **36** sleeved on the pivot **34** and provided with a first restricting portion **362** formed by two opposite planes **364.**

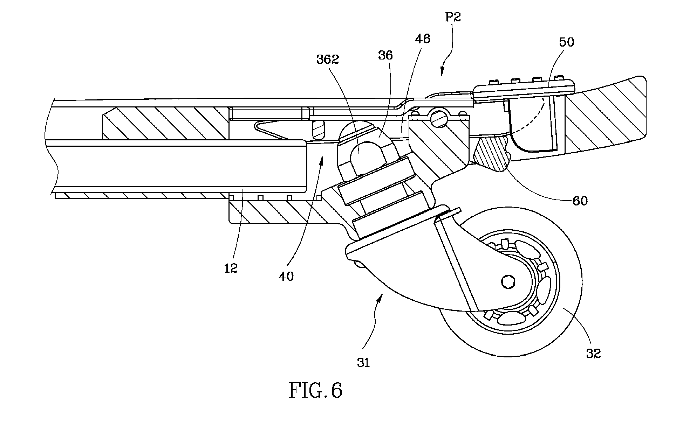

The switch **40** has two spaced lateral walls **44** forming a second restricting portion **46** for accommodation of the restricting member **36** of the wheel seat **31** therebetween, and a pivot **42** connected between the lateral walls **44** and located at about the middles of the lateral walls **44** and pivotally fastened to a rear end of the footboard **11** through a locking plate **48.** By this way, the switch **40** can be pivotable around the pivot **44** relative to the footboard **11** between a restricted position **P1** where the middle of the second restricting portion **46** of the switch **40** is abutted against the first restricting portion **362** of the restricting member **36** and the front end of the second restricting portion **46** of the switch **40** is abutted against two opposite sides of the rotating shaft **12,** as shown in FIG. 4, such that the wheel seat **31** is prohibited from rotation relative to the footboard **11,** and an unrestricted position **P2** where the second restricting portion **46** of the switch **40** is simultaneously separated from the first restricting portion **362** of the restricting member **36** and the opposite sides of the rotating shaft **12,** as shown in FIG. 6, such that the wheel seat **31** is rotatable relative to the footboard **11.**

The treadle **50** is fastened to the rear end of the switch **40,** and drivenable by an external force generated from the user's stepping on the treadle **50** to move the switch **40** from the restricted position **P1,** as shown in FIG. 4, to the unrestricted position **P2,** as shown in FIG. 6.

The elastic member **60,** which is embodied as a U-shaped spring, is fastened to the footboard **11** in such a way that the elastic member **60** is located between the footboard **11** and the switch **40,** as shown in FIGS. 4 and 6, and elastically stopped against the switch **40** for providing a rebound force to the switch **40.**

The structure of the caster switching mechanism **20** is described as above, and the method of operating the caster switching mechanism **20** of the invention will be more fully understood from the following description of the invention. The operation method includes the steps as follows.
a) Apply a force on the treadle **50** with the foot when a user stands on the footboard **11;** therefore, the switch **40** can be driven to pivotally move from the restricted position **P1,** as shown in FIG. 4, to the unrestricted position **P2,** as shown in FIG. 6. Under this circumstance, the wheel seat **31** can be rotatable relative to the footboard **11,** and therefore the scooter **10** can be steered easily when the user twists his body in cooperation with the rotation of the wheel seat **31.** In other words, the caster assembly **30** is at this condition served as a swivel caster assembly where the wheel **32** can roll in any direction corresponding to the orientation of the wheel seat **31.**
b) Thereafter, the user can remove the foot from the treadle **50** to release the force applied on the treadle **50,** such that the switch **40** will be pivotally moved by the help of the elastic member **60** from the unrestricted position **P2** back to the restricted position **P1** where the wheel seat **31** is prohibited from rotation relative to the footboard 11. Accordingly, the caster assembly **30** is at this condition served as a rigid caster assembly where the wheel **32** can roll along only one direction that is parallel to the horizontal direction of an inclined surface of the bevel plate **112** of the footboard **11.** As a result, the user can kick the ground with one foot to move the scooter **10** forward.

By means of the aforesaid design, the switch can be driven to pivotally move by treading on the treadle for determining whether the wheel seat is able to rotate relative to the footboard or not, such that the user can choose the mode of operating the scooter according to the user's needs, and furthermore the user doesn't need to spend money to buy different types of scooters when getting promoted in operating skills. Thus, the scooter **10** equipped with the caster switching mechanism **20** of the present invention has the advantage of adding interest to the user and saving the user's cost.

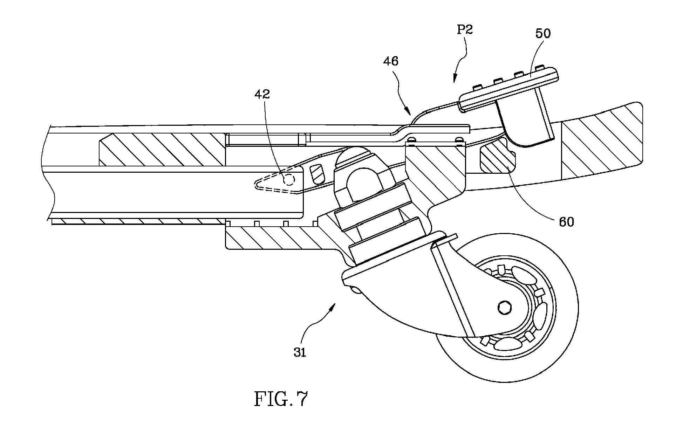

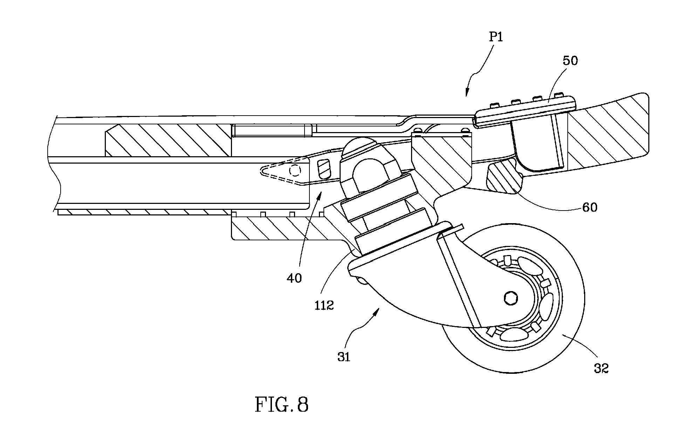

It is to be mentioned that the pivot **42** of the switch **40** isn't limited to be connected with the middles of the lateral walls **44,** and can be designed to be connected with the front ends of the lateral walls **44,** such that the switch **40** is pivotally moved from the unrestricted position **P2,** as shown in FIG. 7, to the restricted position **P1,** as shown in FIG. 8, when the user steps on the treadle **50.** Under this circumstance, the method of operating the caster switching mechanism **20** of the invention includes the steps as follows.

a) Apply a force on the treadle **50** with the foot when the user stands on the footboard **11;** therefore, the switch **40** can be driven to pivotally move from the unrestricted position **P2,** as shown in FIG. 7, to the restricted position **P1,** as shown in FIG. 8. At this time, the wheel seat **31** is prohibited from rotation relative to the footboard **11,** and the wheel **32** can roll along only one direction that is parallel to the horizontal direction of an inclined surface of the bevel plate **112** of the footboard **11.** Under this circumstance, the user needs to kick the ground with one foot to move the scooter **10** forward.

b) Thereafter, the user can remove the foot from the treadle **50** to release the force applied on the treadle **50,** such that the switch **40** will be pivotally moved by the help of the elastic member **60** from the restricted position **P1,** as shown in FIG. 8, back to the unrestricted position **P2,** as shown in FIG. 7, for enabling the wheel seat **31** to be rotatable relative to the footboard **11.** Under this circumstance, the user can twist his body to steer the scooter **10** easily through the cooperation of the rotation of the wheel seat **31.**

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A caster switching mechanism (20) for a scooter (10) having a footboard (11) on which a user is standable, the caster switching mechanism (20) being **characterized in** comprising:
a caster assembly (30) having a wheel seat (31) provided with a top end for being rotatably connected with a bottom of the footboard (11) of the scooter (10) and a first restricting portion (362), and a wheel (32) rotatably connected with a bottom end of the wheel seat (31), and
a switch (40) for being movably connected with the footboard (11) of the scooter (10) in a way that the switch (40) is movable relative to the footboard (11) of the scooter (10) between a restricted position (P1) where the first restricting portion (362) of the wheel seat (31) is stopped by a second restricting portion (46) of the switch (40) such that the wheel seat (31) is prohibited from rotation relative to the footboard (11) of the scooter (10), and an unrestricted position (P2) where the first restricting portion (362) of the wheel seat (31) and the second restricting portion (46) of the switch (40) are separated from each other such that the wheel seat (31) is rotatable relative to the footboard (11) of the scooter (10).

2. The caster switching mechanism (20) as claimed in claim 1, being **characterized in that** the wheel seat (31) has a restricting member (36) with the first restricting portion (362).

3. The caster switching mechanism (20) as claimed in claim 2, being **characterized in that** the first restricting portion (362) of the restricting member (36) is formed by two opposite planes (364), and the second restricting portion (46) of the switch (40) is formed by two spaced lateral walls (44); the lateral walls (44) of the switch (40) are abutted against the planes (364) of the restricting member (36) when the switch (40) is located at the restricted position (P1), and separated from the planes (364) of the restricting member (36) when the switch (40) is located at the unrestricted position (P2).

4. The caster switching mechanism (20) as claimed in claim 3, being **characterized in that** the switch (40) is configured for being pivotally connected with the footboard (11) of the scooter (10) through a pivot (42) connected between the lateral walls (44) of the switch (40).

5. The caster switching mechanism (20) as claimed in claim 3, being **characterized in that** the second restricting portion (46) of the switch (40) is engaged with two opposite sides of a rotating shaft (12) installed in the footboard (11) of the scooter (10) when the switch (40) is located at the restricted position (P1), and disengaged from the opposite sides of the rotating shaft (12) when the switch (40) is located at the unrestricted position (P2).

6. The caster switching mechanism (20) as claimed in claim 1, being **characterized in** comprising a treadle (50) mounted with one end of the switch (40) to be driven by an external force to move the switch (40) from the restricted position (P1) to the unrestricted position (P2).

7. The caster switching mechanism (20) as claimed in claim 6, being **characterized in** comprising an elastic member (60) disposed between the footboard (11) of the scooter (10) and the switch (40) for elastically urging the switch (40) to keep the switch (40) at the restricted position (P1).

8. The caster switching mechanism (20) as claimed in claim 1, being **characterized in** comprising a treadle (50) mounted with the switch (40) to be driven by an external force to move the switch (40) from the unrestricted position (P2) to the restricted position (P1).

9. The caster switching mechanism (20) as claimed in claim 8, being **characterized in** comprising an elastic member (60) disposed between the footboard (11) of the scooter (10) and the switch (40) for elastically urging the switch (40) to keep the switch (40) at the unrestricted position (P2).

10. The caster switching mechanism (20) as claimed in claim 7 or 9, being **characterized in that** the elastic member (60) is a U-shaped spring.

11. The caster switching mechanism (20) as claimed in claim 1, being **characterized in that** the wheel seat (31) has a pivot (34) for passing through a bevel plate (112) of the footboard (11) of the scooter (10) such that the wheel seat (31) is installed in an inclined manner.

12. The caster switching mechanism (20) as claimed in claim 1, being **characterized in that** the switch (40) is configured for being pivotally connected with the footboard (11) of the scooter (10).

13. A method of operating the caster switching mechanism (20) as claimed in claim 1, being **characterized in** comprising the steps of:
a) stepping on the switch (40) to drive the switch (40) to move from the restricted position (P1) to the unrestricted position (P2) for enabling the wheel seat (31) to be rotatable relative to the footboard (11) of the scooter (10); and
b) releasing the switch (40) to allow the switch (40) to move from the unrestricted position (P2) back to the restricted position (P1) for prohibiting the wheel seat (31) from rotation relative to the footboard (11) of the scooter (10).

14. A method of operating the caster switching mechanism (20) as claimed in claim 1, being **characterized in** comprising the steps of:
a) stepping on the switch (40) to drive the switch (40) to move from the unrestricted position (P2) to the restricted position (P1) for prohibiting the wheel seat (31) from rotation relative to the footboard (11) of the scooter (10); and
b) releasing the switch (40) to allow the switch (40) to move from the restricted position (P1) back to the unrestricted position (P2) for enabling the wheel seat (31) to be rotatable relative to the footboard (11) of the scooter (10).

15. The method as claimed in claim 13 or 14, being **characterized in that** the wheel seat (31) is configured for being pivotally connected with a bevel plate (112) of the footboard (11) of the scooter (10) and the wheel (32) rolls along a direction parallel to a horizontal direction of an inclined surface of the bevel plate (112) when the switch (40) is located at the restricted position (P1).

## Amended claims

### Amended claims in accordance with Rule 137(2) EPC.

**1.** A caster switching mechanism (20) for a scooter (10) having a footboard (11) on which a user is standable, the caster switching mechanism (20) being **characterized in** comprising:
a caster assembly (30) having a wheel seat (31) provided with a top end for being rotatably connected with a bottom of the footboard (11) of the scooter (10) and a first restricting portion (362), and a wheel (32) rotatably connected with a bottom end of the wheel seat (31), and
a switch (40) for being movably connected with the footboard (11) of the scooter (10) in a way that the switch (40) is movable relative to the footboard (11) of the scooter (10) between a restricted position (P1) where the first restricting portion (362) of the wheel seat (31) is stopped by a second restricting portion (46) of the switch (40) such that the wheel seat (31) is prohibited from rotation relative to the footboard (11) of the scooter (10), and an unrestricted position (P2) where the first restricting portion (362) of the wheel seat (31) and the second restricting portion (46) of the switch (40) are separated from each other such that the wheel seat (31) is rotatable relative to the footboard (11) of the scooter (10);
**characterized in that** the switch (40) is configured for being pivotally connected with the footboard (11) of the scooter (10).

**2.** The caster switching mechanism (20) as claimed in claim 1, being **characterized in that** the wheel seat (31) has a restricting member (36) with the first restricting portion (362).

**3.** The caster switching mechanism (20) as claimed in claim 2, being **characterized in that** the first restricting portion (362) of the restricting member (36) is formed by two opposite planes (364), and the second restricting portion (46) of the switch (40) is formed by two spaced lateral walls (44); the lateral walls (44) of the switch (40) are abutted against the planes (364) of the restricting member (36) when the switch (40) is located at the restricted position (P1), and separated from the planes (364) of the restricting member (36) when the switch (40) is located at the unrestricted position (P2).

**4.** The caster switching mechanism (20) as claimed in claim 3, being **characterized in that** the switch (40) is configured for being pivotally connected with the footboard (11) of the scooter (10) through a pivot (42) connected between the lateral walls (44) of the switch (40).

**5.** The caster switching mechanism (20) as claimed in claim 3, being **characterized in that** the second restricting portion (46) of the switch (40) is engaged with two opposite sides of a rotating shaft (12) installed in the footboard (11) of the scooter (10) when the switch (40) is located at the restricted position (P1), and disengaged from the opposite sides of the rotating shaft (12) when the switch (40) is located at the unrestricted position (P2).

**6.** The caster switching mechanism (20) as claimed in claim 1, being **characterized in** comprising a treadle (50) mounted with one end of the switch (40) to be driven by an external force to move the switch (40) from the restricted position (P1) to the unrestricted position (P2).

**7.** The caster switching mechanism (20) as claimed in claim 6, being **characterized in** comprising an elastic member (60) disposed between the footboard (11) of the scooter (10) and the switch (40) for elastically urging the switch (40) to keep the switch (40) at the restricted position (P1).

**8.** The caster switching mechanism (20) as claimed in claim 1, being **characterized in** comprising a treadle (50) mounted with the switch (40) to be driven by an external force to move the switch (40) from the unrestricted position (P2) to the restricted position (P1).

**9.** The caster switching mechanism (20) as claimed in claim 8, being **characterized in** comprising an elastic member (60) disposed between the footboard (11) of the scooter (10) and the switch (40) for elastically urging the switch (40) to keep the switch (40) at the unrestricted position (P2).

**10.** The caster switching mechanism (20) as claimed in claim 7 or 9, being **characterized in that** the elastic member (60) is a U-shaped spring.

**11.** The caster switching mechanism (20) as claimed in claim 1, being **characterized in that** the wheel seat (31) has a pivot (34) for passing through a bevel plate (112) of the footboard (11) of the scooter (10) such that the wheel seat (31) is installed in an inclined manner.

**12.** A method of operating the caster switching mechanism (20) as claimed in claim 1, being **characterized in** comprising the steps of:
a) stepping on the switch (40) to drive the switch (40) to pivotally move from the restricted position (P1) to the unrestricted position (P2) for enabling the wheel seat (31) to be rotatable relative to the footboard (11) of the scooter (10); and
b) releasing the switch (40) to allow the switch (40) to pivotally move from the unrestricted position (P2) back to the restricted position (P1) for prohibiting the wheel seat (31) from rotation relative to the footboard (11) of the scooter (10).

**13.** A method of operating the caster switching mechanism (20) as claimed in claim 1, being **characterized in** comprising the steps of:
a) stepping on the switch (40) to drive the switch (40) to pivotally move from the unrestricted position (P2) to the restricted position (P1) for prohibiting the wheel seat (31) from rotation relative to the footboard (11) of the scooter (10); and
b) releasing the switch (40) to allow the switch (40) to pivotally move from the restricted position (P1) back to the unrestricted position (P2) for enabling the wheel seat (31) to be rotatable relative to the footboard (11) of the scooter (10).

**14.** The method as claimed in claim 12 or 13, being **characterized in that** the wheel seat (31) is configured for being pivotally connected with a bevel plate (112) of the footboard (11) of the scooter (10) and the wheel (32) rolls along a direction parallel to a horizontal direction of an inclined surface of the bevel plate (112) when the switch (40) is located at the restricted position (P1).
